# FASCICULE DE BREVET EUROPEEN

(11) **EP 2 699 827 B1**
(45) Date de publication et mention de la délivrance du brevet: **27.05.2015**
(21) Numéro de dépôt: 12715108.2
(22) Date de dépôt: 19.04.2012
(51) Int. Cl.: F16J 15/12, H01M 8/24

(54) **JOINT D'ETANCHEITE METALLIQUE A AME CERAMIQUE**
METALLIDICHTUNG MIT KERAMISCHEM KERN
METAL SEAL HAVING CERAMIC CORE

(30) Priorité: 22.04.2011 FR 1153519
(43) Date de publication de la demande: 26.02.2014
(73) Titulaire: Commissariat à l'Énergie Atomique et aux Énergies Alternatives, 75015 Paris (FR); Technetics Group France SAS, 42000 Saint-Etienne (FR)
(72) Inventeur: PALERMO, François, F-84840 Lapalud (FR); BRUGUIERE, Lionel, F-26790 Suze La Rousse (FR)
(74) Mandataire: Ahner, Philippe
(86) Numéro de dépôt international: PCT/EP2012/057136
(87) Numéro de publication internationale: WO 2012/143428

(56) Documents cités:
- WO-A1-2005/024280
- DE-A1-102006 058 335

## Description

### Domaine technique

Le sujet de l'invention est un joint d'étanchéité à faces métalliques, dont une propriété importante est qu'il est isolant électrique.

Des applications concernent principalement la production d'hydrogène par dissociation de la molécule d'eau (H₂O) dans un électrolyseur haute température appelé EHT et/ou la production d'électricité à partir de gaz combustible dans les piles à combustible type SOFC (de l'anglais Solid Oxyde Fuel Cell), mais ces utilisations ne sont pas exhaustives. Dans les deux cas, les cellules electrochimiques utilisées dans ces procédés de production sont portées à haute température.

### Etat de la technique

On trouve au centre du procédé d'un électrolyseur de vapeur d'eau à haute température trois éléments principaux.

Les cellules électrochimiques sont constituées de trois couches, deux couches d'électrode poreuses, une cathode et une anode, de part et d'autre d'un électrolyte dense. Cet électrolyte, le plus souvent une céramique, devient conducteur ionique lorsqu'on lui applique une tension appropriée.

Deux interconnecteurs, un anodique et un cathodique reliés respectivement à l'anode et à la cathode, sont en contact avec les électrodes poreuses de la cellule. Ils peuvent se retrouver en contact avec l'électrolyte de la cellule par l'intermédiaire d'un joint pour étancher les chambres anodique et cathodique.

Sur le principe de fonctionnement, l'eau sous forme de vapeur se dissocie au contact de la cathode. De l'hydrogène se forme côté cathodique tandis que les ions oxygènes sont acheminés via l'électrolyte (conducteur ionique) vers le compartiment anodique où ils se recombinent au niveau de l'électrode.

L'acheminement des fluides et leur évacuation nécessitent de réaliser de nombreuses étanchéités entre les différents éléments de l'électrolyseur pour éviter la recombinaison hydrogène-oxygène et la fuite de ces gaz produits vers l'extérieur de l'électrolyseur.

On identifie deux types de site à étancher, une interface métal/métal entre les interconnecteurs où il est impératif d'avoir un joint isolant électrique et une interface métal/céramique qui nécessite un joint accommodant le cisaillement lors des transitoires thermiques dû à la différence des coefficients de dilatation thermique de ces matériaux; les types de métaux employés dans un électrolyseur ayant tendance à se dilater plus que les éléments en céramique.

La présence de matériaux fragiles comme l'électrolyte de la cellule conduit à limiter les contraintes et donc les efforts de serrage du joint d'étanchéité.

A moyen et long terme, d'autres éléments tels que les aspects démontabilité et recyclabilité des interconnecteurs sont également à prendre en considération.

Les joints d'étanchéité présents aux jeux de la cellule doivent conserver une bonne étanchéité aux températures élevées, de plusieurs centaines de degrés Celsius, où ils sont susceptibles d'être portés. Les variations de température peuvent non seulement altérer la plupart des matériaux usuels mais produire un cisaillement important sur le joint par des dilatations différentielles des deux portées entre lesquelles il est installé, ou par des températures hétérogènes dans la cellule. Un autre impératif à respecter est que le joint doit être isolant de l'électricité.

La plupart des matériaux ne possèdent pas ces propriétés. Les matériaux peu altérables aux hautes températures sont souvent fragiles mécaniquement et donc peu résistants au cisaillement, alors que les matériaux ductiles ou susceptibles de se fissurer sans se rompre au cisaillement risquent de présenter des propriétés d'étanchéité insuffisantes. Tous ces matériaux s'altèrent aussi souvent aux hautes températures, perdant leurs propriétés initiales, ce qui les rend inutiles. Beaucoup d'entre eux ne sont pas isolants de l'électricité. Certains sont enfin sensibles à la corrosion par l'atmosphère de la cellule.

Il n'existe pas aujourd'hui de joint d'étanchéité répondant à l'ensemble des critères nécessaires pour ce type d'application.

Le joint d'étanchéité se rapprochant le plus de notre invention est connu sous le titre « Joint d'étanchéité entre deux éléments à coefficients de dilatation thermique différents » et le N° FR-A-2951 517. C'est un joint d'étanchéité métallique, son principal atout est comme son titre l'indique l'accommodation des dilatations thermiques en revanche sa fabrication est complexe. De plus, il conduit l'électricité, il ne peut donc être installé entre les deux interconnecteurs d'un électrolyseur de vapeur d'eau à haute température.

Les joints d'étanchéité dits compressifs (WO-A-2005/024280), typiquement du mica, se désagrègent dans le temps et demandent souvent des efforts de serrage conséquents.

Les joints d'étanchéité à base de brasures DE-A-102006058335 présentent des problèmes de compatibilité chimique avec l'environnement d'un électrolyseur haute température.

Les joints d'étanchéité en matière vitreuse ou vitrocéramique conduisent généralement à la casse de la cellule lors de l'ouverture de l'électrolyseur pour maintenance par exemple car une fois le joint formé, il adhère fortement aux portées et conduit à la rupture de l'électrolyte de la cellule. Les interconnecteurs sont difficilement réutilisables à cause du dépôt que laisse ce type de matière sur les portées. D'une façon générale, les joints d'étanchéité en matière vitreuse ou vitrocéramique ne facilitent pas le démontage et la récupérations des éléments principaux d'un électrolyseur de vapeur d'eau à haute température.

### Exposé de l'invention

Le joint d'étanchéité qui est le sujet de l'invention présente une combinaison de couches de différents matériaux qui obvie à ces inconvénients et peut être utilisée pour étanchéifier des cellules à 800°C par exemple, avec des taux d'étanchéité de l'ordre de 2.10⁻⁵ Pa.m³.s⁻¹ pour plusieurs centaines de millibars, voire 1 bar de différence de pression. Il est isolant de l'électricité et sa résistance à la corrosion est suffisante. Il est facilement et proprement démontable.

Sous une forme générale, il est relatif à un joint d'étanchéité destiné à travailler à une température d'utilisation de plusieurs centaines de degrés Celsius, caractérisé en ce qu'il comprend, de chaque côté d'une couche centrale isolante de l'électricité, une couche externe métallique munie d'un motif d'accrochage à une portée à étanchéifier, et une couche de liant entre la couche externe et la couche centrale, la couche de liant étant en matière vitreuse ou vitrocéramique à la température d'utilisation.

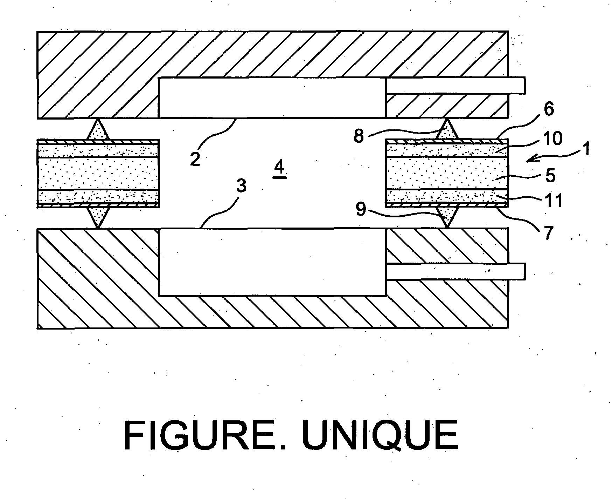

L'invention sera maintenant décrite en liaison à la figure. Le joint 1 est comprimé entre deux portées 2 et 3 planes se faisant face. Il contribue à l'étanchéité d'une cellule 4 délimitée encore par des pièces comprenant les portées 2 et 3. Il peut s'étendre sur un cercle, un polygone ou tout autre ligne.

Le joint 1 est formé d'abord d'une couche centrale 5 en une matière isolante de l'électricité et choisie pour sa faible perméabilité à la diffusion de gaz et sa grande inertie chimique à l'égard des atmosphères corrosives. Cette couche de noyau a une épaisseur adaptable au logement qui est consacrée au joint d'étanchéité.

Les faces externes du joint sont formées par deux couches ou rondelles métalliques 6 et 7 situées respectivement face aux portées 2 et 3 et au milieu desquelles s'élèvent des motifs 8 et 9 à section triangulaire et dont la pointe est en contact avec la portée 2 ou 3 respective. Quand l'effort de serrage nécessaire pour établir l'étanchéité est toutefois appliqué, ces pointes sont aplaties et leur matière entre en contact intime avec celles des portées 2 et 3, ce qui contribue à l'établissement d'une bonne étanchéité à cet endroit. Le serrage ne s'accompagne pas d'une compression excessive du joint 1, les déformations étant concentrées aux motifs 8 et 9 en matière ductile.

Des couches de liant 10 et 11 relient les couches métalliques 6 et 7 à la couche centrale 5 de noyau. Elles sont en matière vitreuse, notamment en verre ne présentant pas de cristallisation à la température atteinte en utilisation, ou bien en vitrocéramique. Les couches de liant 10 et 11 peuvent être de nature différente ou identique sur un même élément joint selon les portées en contact.

L'empilement des couches constitué des rondelles métalliques, 6 et 7, du liant, 10 et 11, et du noyau, 5 ont, outre leur fonction d'étancher radialement et axialement le système, celle d'absorber les cisaillements redevables aux différences de dilatation des portées 2 et 3.

Les différentes couches peuvent être réalisées à partir de feuillards, de sorte que la réalisation du joint se ramène au découpage et à l'assemblage des couches et qu'elle est donc simple, en particulier sans soudure. L'encombrement du joint est réduit. Son démontage et son remplacement sont faciles. Leur impact sur l'environnement soit les portées 2 et 3 n'est que modéré et n'induit pas d'importantes rectifications pour leur recyclage.

Quelques matériaux convenables sont :
- pour la couche centrale 5 de noyau : idéalement une céramique du type zircone yttriée (YSZ) commune à l'élément central des cellules électrochimiques, du Macor® vitrocéramique facilement usinable et possédant un coefficient de dilatation thermique proche de la zircone et des matériaux métallique des interconnecteurs, mais on peut également envisager de l'alumine (Al₂O₃) par exemple pour d'autres applications ;
- pour les couches métalliques 6 et 7 externes: des alliages à base de Fer, de Chrome et d'Aluminium du type OC404 commercialisé par la marque FeCrAlloy ou encore des alliages superélastiques comme l'Inconel 718 SPF;
- pour les couches de liant 10 et 11 intermédiaire: des verres de borosilicates de sodium et d'aluminium à forte teneur en silicium, comme le JV 36 du CEA; des vitro-céramiques en aluminosilicate de calcium comme le CAS du CEA; des solutions commerciales de chez la Société Schott, le 8422(verre), le G018-304(vitrocéramique).

D'une façon générale, ces dénominations sont déposées.

## Revendications

1. Joint d'étanchéité (1) destiné à travailler à une température d'utilisation de plusieurs centaines de degrés Celsius, **caractérisé en ce qu'**il comprend, de chaque côté d'une couche centrale (5) isolante de l'électricité, une couche métallique (6, 7) externe munie d'un motif (8, 9) d'accrochage à une portée à étanchéifier, et une couche de liant (10, 11) entre la couche externe et la couche centrale, la couche de liant étant en matière vitreuse ou vitrocéramique à la température d'utilisation.

2. Joint d'étanchéité selon la revendication 1, **caractérisé en ce que** les couches de liants (10,11) sont identiques ou différentes en fonction des interfaces à étancher.

3. Joint d'étanchéité selon l'une quelconque des revendicatins 1 ou 2, **caractérisé en ce que** les motifs ont une section triangulaire à pointe dirigée vers la portée.

4. Joint d'étanchéité selon l'une quelconque des revendications 1 à 3, **caractérisé en ce que** les couches métalliques (6, 7) sont plus fines que la couche centrale (12).

5. Joint d'étanchéité selon l'une
quelconque des revendications 1 à 4, **caractérisé en ce que** la couche centrale est en céramique.

6. Joint d'étanchéité selon l'une quelconque des revendications 1 à 5, **caractérisé en ce que** les couches de liant (10 et 11) et la couche centrale) sont choisies en fonction de coefficients de dilatation thermique intermédiaires entre les portées (2 et 3).

## Patentansprüche

1. Dichtverbindung (1), die dazu ausgelegt ist, bei einer Einsatztemperatur von mehreren hundert Grad Celsius zu arbeiten, **dadurch gekennzeichnet, dass** sie auf jeder Seite einer zentralen, elektrisch isolierenden Schicht (5) eine externe Metallschicht (6, 7) umfasst, die mit einem Motiv (8, 9) zur Ankopplung an einem abzudichtenden Öffnungsbereich ausgestattet ist, sowie eine Bindeschicht (10, 11) zwischen der externen Schicht und der zentralen Schicht, wobei die Bindeschicht aus einem bei der Einsatztemperatur glasartigen oder glaskeramikartigen Material ist.

2. Dichtverbindung nach Anspruch 1, **dadurch gekennzeichnet, dass** die Bindeschichten (10, 11) als Funktion der abzudichtenden Grenzflächen identisch oder verschieden sind.

3. Dichtverbindung nach einem der Ansprüche 1 oder 2, **dadurch gekennzeichnet, dass** die Motive einen dreieckigen Querschnitt mit einer Spitze haben, die zum Öffnungsbereich hin orientiert ist.

4. Dichtverbindung nach einem der Ansprüche 1 bis 3, **dadurch gekennzeichnet, dass** die Metallschichten (6, 7) dünner als die zentrale Schicht (12) sind.

5. Dichtverbindung nach einem der Ansprüche 1 bis 4, **dadurch gekennzeichnet, dass** die zentrale Schicht aus Keramik ist.

6. Dichtverbindung nach einem der Ansprüche 1 bis 5, **dadurch gekennzeichnet, dass** die Bindeschichten (10 und 11) und die zentrale Schicht ausgewählt sind als Funktion von intermediären thermischen Ausdehnungskoeffizienten zwischen den Öffnungsbereichen (2 und 3).

## Claims

1. A seal (1) for working at an operating temperature of several hundreds degrees Celsius, **characterised in that** it comprises, on either side of an electrically insulating centre layer (5), an outer metal layer (6, 7) provided with a pattern (8, 9) for anchoring to a bearing face to be sealed, and a binder layer (10, 11) between the outer layer and the centre layer, the binder layer being of glassy or glass-ceramic material at the operating temperature.

2. The seal according to claim 1, **characterised in that** the binder layers (10, 11) are identical or different depending on the interfaces to be sealed.

3. The seal according to any of claims 1 or 2, **characterised in that** the patterns have a triangular cross-section with a tip pointed to the bearing face.

4. The seal according to any of claims 1 to 3, **characterised in that** the metal layers (6, 7) are thinner than the centre layer (12).

5. The seal according to any of claims 1 to 4, **characterised in that** the centre layer is in ceramics.

6. The seal according to any of claims 1 to 5, **characterised in that** the binder layers (10 and 11) and the centre layer are selected depending on the intermediate thermal expansion coefficients between the bearing faces (2 and 3).
